# EUROPEAN PATENT SPECIFICATION

(11) **EP 3 705 363 B1**
(45) Date of publication and mention of the grant of the patent: **27.11.2024**
(21) Application number: 18874592.1
(22) Date of filing: 31.01.2018
(51) Int. Cl.: B60S 5/06, B60L 53/35, B60L 53/80

(54) **VEHICLE-POSITIONING DEVICE FOR BATTERY CHARGING AND SWAPPING STATION**
FAHRZEUGPOSITIONIERUNGSVORRICHTUNG FÜR BATTERIELADE- UND WECHSELSTATION
DISPOSITIF DE POSITIONNEMENT DE VÉHICULE POUR STATION DE CHARGE ET D'ÉCHANGE DE BATTERIE

(30) Priority: 02.11.2017 CN 201721442707 U
(43) Date of publication of application: 09.09.2020
(73) Proprietor: NIO (Anhui) Holding Co., Ltd., Hefei City, Anhui Province (CN)
(72) Inventor: YAN, Bingyong, Anting, Jiading Shanghai (CN); HAO, Zhanduo, Anting, Jiading Shanghai (CN)
(74) Representative: Vossius & Partner Patentanwälte Rechtsanwälte mbB
(86) International application number: PCT/CN2018/074818
(87) International publication number: WO 2019/085304

(56) References cited:
- EP-A1- 3 683 104
- WO-A1-2017/092522
- WO-A1-2018/068559
- CN-A- 105 416 248
- CN-A- 106 043 246
- CN-A- 106 891 865
- CN-A- 106 891 865
- CN-U- 205 997 867
- CN-U- 205 997 867
- US-A- 4 102 273

## Description

### Technical Field

The invention relates to the field of battery charging and swapping, and in particular to a vehicle positioning device for a battery charging and swapping station.

### Background Art

With the popularization of electric vehicles, how to quickly and effectively provide electric energy replenishment for electric vehicles has become a very important issue for vehicle owners and major manufacturers. The current mainstream electric energy replenishment solutions on the market are mainly divided into charging solutions and battery swapping solutions. The charging solutions are mainly to quickly or slowly charge the electric vehicles via a charging pile (provided in a charging station or a parking space), and the battery swapping solutions are mainly to directly swap the on-board used battery for a fresh battery. Compared with the charging solutions, the battery swapping solutions can complete the electric energy replenishment of the electric vehicles in a very short time, and do not affect the service life of the traction battery, so they are one of the main development directions of electric energy replenishment. The battery swapping solutions are usually carried out in battery charging and swapping stations. A battery swap station generally comprises a battery swap platform for battery swapping of an electric vehicle, a battery compartment for storing and performing electric energy replenishment on the used battery, and a battery swap trolley for carrying the fresh/used traction battery between the battery swap platform and the battery compartment.

When performing the battery swapping, first, the electric vehicle needs to be driven to the battery swap platform, and a vehicle positioning device on the battery swap platform is used to position a vehicle body such that the battery swap trolley can be accurately positioned with the traction battery at the bottom of the vehicle, and the traction battery is then swapped.

WO 2017/092522 A1 discloses a replacement equipment of replacing electric vehicle battery including a positioning structure. The positioning structure includes a first positioning structure for supporting the passenger electric vehicle in the advancing direction of the passenger electric vehicle and a second positioning structure mounted on a holder. A battery changer is mounted on the holder and brought into connection with the second positioning structure so that the second positioning structure controls the battery changer to adjust between the battery changer and the battery. Therefore, the first positioning structure for positioning the passenger electric vehicle in the advancing direction is not mounted on the holder.

CN 106 891 865 A discloses another chassis type electric power station for electric vehicle. Specifically, the chassis type electric power station includes a power changing platform provided with a V-shaped roller set for carrying the front wheels of the electric vehicle in order to position the front wheels in the X direction, a horizontal roller set for carrying the rear wheels of the electric vehicle, and a pusher device provided on both sides of the V-shaped roller group and the horizontal roller group, respectively, to push the front and rear wheels of the electric vehicle in the Y direction, respectively. Both the V-shaped roller set and the horizontal roller set are mounted on the power changing platform.

The invention patent with the publication number CN 205997867 U also discloses a vehicle tire positioning device for a battery swap station, the device comprising a bottom plate and guide columns installed on the bottom plate, a front-wheel rolling shaft assembly, a front-wheel alignment push rod, a rear-wheel rolling shaft assembly and a rear-wheel alignment push rod. The front-wheel alignment push rod and the rear-wheel alignment push rod are respectively used to push the front and rear wheels of the vehicle to move in the left and right directions, such that the vehicle can be accurately positioned in the left and right directions. Each alignment push rod comprises a push rod motor, a reduction gear box, and two couplings, two lead screws and two push plates which are symmetrically arranged. During operation, the push rod motor transmits power to the two symmetrical push plates through the reduction gear box, the couplings and the lead screws, and the two push plates then respectively push two tires from the inside thereof to complete the positioning of the vehicle. Although such a configuration can realize the precise positioning function of the vehicle, there are still certain defects in practical applications. First, due to the configuration in which a push rod motor is used to drive two push rods to push the tires from the inside to the outside, not only the push rod motor is prone to overload, affecting the service life of the motor, but also the positioning device cannot be differentially adjusted because the two push rods can only telescopically move at the same time. Secondly, since the front-wheel alignment push rod and the rear-wheel alignment push rod are both arranged in the middle of the battery swap platform, they occupy a certain amount of parking space, such that more accurate parking technology is required when the vehicle enters the battery swap platform. The difficulty in parking for a vehicle owner is increased, bringing about a bad experience of battery swapping.

Accordingly, there is a need in the art for a new vehicle positioning device for a battery charging and swapping station to solve the above problems.

### Summary of the Invention

In order to solve the above problems in the prior art, that is, to solve the problems in the existing vehicle positioning devices for battery charging and swapping stations of the motor being prone to overloaded, differential adjustment being unable to be performed, and the increased difficulty in parking caused thereby, a vehicle positioning device for a battery charging and swapping station is set out in the appended set of claims.as defined in claim 1. Further embodiments are disclosed in the dependent claims.

In the above preferred technical solution of the vehicle positioning device for a battery charging and swapping station, the pull plates are further configured to be able to pull the front/rear wheels from the outside to the inside of the front/rear wheels of the vehicle under the drive of the power transmission portions, so as to position the front/rear wheels of the vehicle in the second direction.

In the above preferred technical solution of the vehicle positioning device for a battery charging and swapping station, each of the power transmission portions comprises a drive motor, and a lead screw and nut unit, wherein the drive motor is connected to a lead screw of the lead screw and nut unit, and the pull plate is connected to a nut of the lead screw and nut unit.

In the above preferred technical solution of the vehicle positioning device for a battery charging and swapping station, each of the first centring mechanisms further comprises a guide rail arranged in the second direction and a slider matching the guide rail, wherein the slider is connected to the respective pull plate to move the pull plate in the second direction.

In the above preferred technical solution of the vehicle positioning device for a battery charging and swapping station, the two first centring mechanisms are installed on the battery swap platform, and/or the two first centring mechanisms are symmetrically arranged.

In the above preferred technical solution of the vehicle positioning device for a battery charging and swapping station, the second positioning portion further comprises two second centring mechanisms configured to be able to correspondingly move and position rear/front wheels of the vehicle in the second direction.

In the above preferred technical solution of the vehicle positioning device for a battery charging and swapping station, each of the second centring mechanisms comprises the power transmission portion provided in the middle of the battery swap platform, and the pull plate extending from the power transmission portion towards one side; and the pull plates are able to pull, under the drive of the power transmission portions, the rear wheels from the outside to the inside of the rear wheels of the vehicle, so as to position the rear wheels of the vehicle in the second direction.

In the above preferred technical solution of the vehicle positioning device for a battery charging and swapping station, the first positioning portion comprises two first roller groups, wherein the two first roller groups are able to position the front/rear wheels of the vehicle in the first direction, and the first roller groups allow the front/rear wheels to move in the second direction.

In the above preferred technical solution of the vehicle positioning device for a battery charging and swapping station, each of the first roller groups comprises a plurality of V-shaped roller units arranged side by side in the second direction, and the front/rear wheels of the vehicle are able to be embedded into the V-shaped roller units.

In the above preferred technical solution of the vehicle positioning device for a battery charging and swapping station, the first positioning portion further comprises a second roller group, which is be able to correspondingly move the rear/front wheels of the vehicle in the second direction.

In the above preferred technical solution of the vehicle positioning device for a battery charging and swapping station, the second roller group comprises a plurality of I-shaped roller units arranged in the first direction, which are arranged side by side in the second direction, and the rear/front wheels are able to be supported on the I-shaped roller units.

It can be understood by those skilled in the art that in a preferred technical solution of the invention, a vehicle positioning device comprises a first positioning portion and a second positioning portion which are provided at a battery swap platform. The first positioning portion is used to position a vehicle in a first direction, and allows the vehicle to move in a second direction. The second positioning portion is used to position the vehicle in the second direction. The second positioning portion comprises two first centring mechanisms. Each of the first centring mechanisms comprises a power transmission portion provided in the middle of the battery swap platform, and a pull plate extending from the power transmission portion towards one side. The pull plates are configured to be able to pull the wheels from the outside to the inside of the front/rear wheels of the vehicle under the drive of the power transmission portions, so as to position the front/rear wheels of the vehicle in the second direction. By using two first centring mechanisms to pull the wheels from the outside to the inside of the wheels to perform positioning, the invention can realize the unilateral differential adjustment of the displacement of the vehicle, that is, improving the positioning accuracy of the vehicle by means of the unilateral fine-adjustment; moreover, the arrangement in which each first centring mechanism corresponds to one power transmission portion also greatly reduces the load of the motor, thereby preventing the occurrence of overload of the motor. In addition, the use of the arrangement in which the power transmission portions are provided in the middle of the battery swap platform, and the pull plates are provided on two sides also effectively reduces the footprint of the first centring mechanisms on the battery swap platform, reduces the difficulty in parking, and improves the battery swapping experience.

### Brief Description of the Drawings

A vehicle positioning device for a battery charging and swapping station of the invention will be described below with reference to the accompanying drawings and in conjunction with a pure electric vehicle. In the drawings:
Fig. 1 is a schematic structural view of a vehicle positioning device for a battery charging and swapping station of the invention;
Fig. 2 is a partial enlarged view of part A in Fig. 1; and
Fig. 3 is a partial enlarged view of part B in Fig. 1.

### List of reference numerals:

1. Battery swap platform; 2. First positioning portion; 21. Front-wheel roller group; 211. V-shaped roller unit; 2111. First roller; 22. Rear-wheel roller group; 221. I-shaped roller unit; 2211. Second roller; 3. Second positioning portion; 31. Front-wheel centring mechanism; 32. Rear-wheel centring mechanism; 331. Drive motor; 332. Lead screw; 333. Nut; 334. Guide rail; 335. Slider; 34. Pull plate; 35. Mounting frame.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although an I-shaped roller unit only comprises a second roller in the drawings, such a configuration is not invariable, those skilled in the art can adjust same according to requirements so as to adapt to specific application scenarios. For example, the I-shaped roller unit may also be configured as a plurality of second rollers connected in series.

It should be noted that in the description of the invention, the terms, such as "centre", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For those skilled in the art, the specific meaning of the above terms in the invention can be interpreted according to the specific situation.

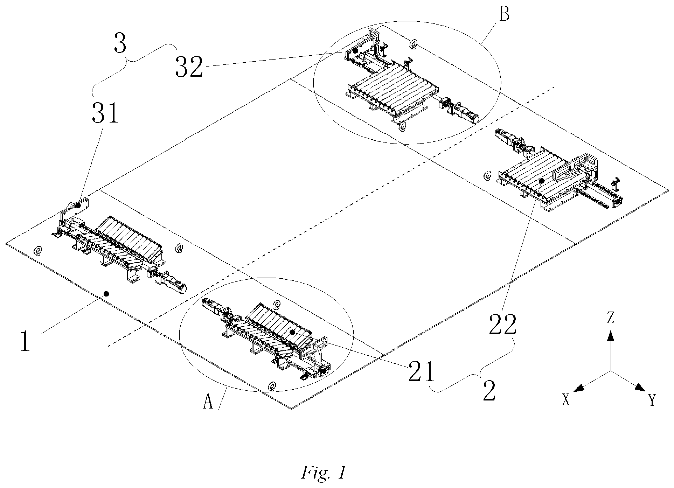

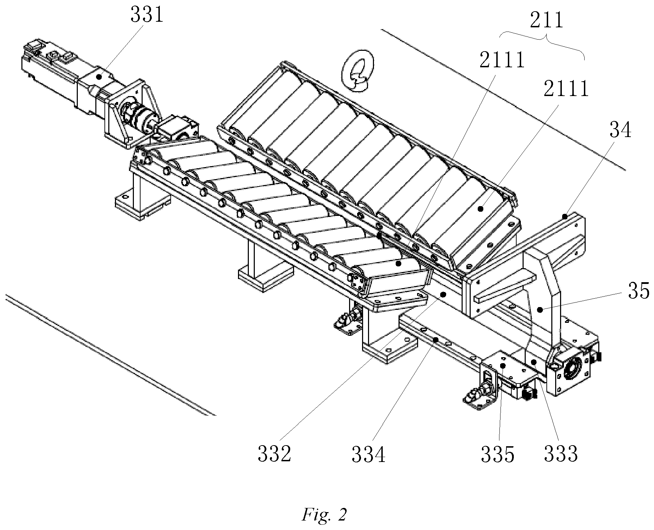

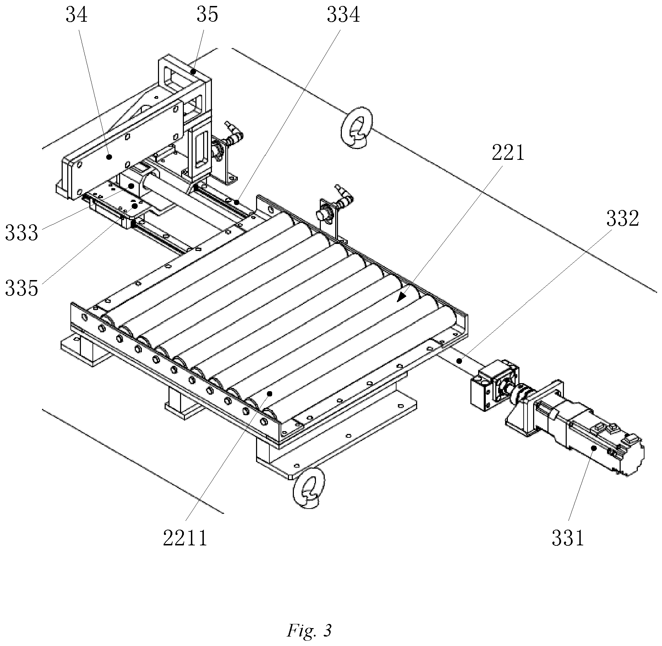

Referring to Figs. 1, 2 and 3, Fig. 1 is a schematic structural view of a vehicle positioning device for a battery charging and swapping station of the invention; Fig. 2 is a partial enlarged view of part A in Fig. 1; and Fig. 3 is a partial enlarged view of part B in Fig. 1.

As shown in Fig. 1, the vehicle positioning device for a battery charging and swapping station of the invention mainly comprises a first positioning portion 2 and a second positioning portion 3 which are provided at a battery swap platform 1. The first positioning portion 2 is used to position an electric vehicle, which enters the battery swap platform 1, in a first direction, and the first positioning portion 2 also allows the electric vehicle to move in a second direction perpendicular to the first direction. The second positioning portion 3 is used to position the electric vehicle in the second direction. After the positioning of the first positioning portion 2 and the positioning of the second positioning portion 3 are completed, a battery swap robot can swap a traction battery of the electric vehicle. It should be noted that the first direction may be the driving direction when the electric vehicle enters the battery swap platform 1 (i.e., the X-axis direction in Fig. 1, the same below), and the second direction may be a width direction of the electric vehicle (i.e., the Y-axis direction in Fig. 1, the same below) perpendicular to the driving direction of the electric vehicle.

With continued reference to Fig. 1 and in combination with Figs. 2 and 3, specifically, the first positioning portion 2 may comprise a front-wheel roller group 21 (i.e., a first roller group) and a rear-wheel roller group 22 (i.e., a second roller group). The front-wheel roller group 21 comprises a plurality of V-shaped roller units 211 (viewed in the Y-axis direction, which are V-shaped) arranged side by side in the Y-axis direction. Front wheels of the electric vehicle can be fixed in the X-axis direction in such a way that they are embedded into the V-shaped roller unit 211. After being fixed in the X-axis direction, the front wheels can also move in the Y-axis direction as the V-shaped roller units 211 roll. Referring to Fig. 2, preferably, as viewed in the Y-axis direction, the V-shaped roller unit 211 may be two first rollers 2111 arranged in a V-shape. It is conceivable to those skilled in the art that the number of V-shaped roller units 211 of the front-wheel roller group 21 and the number and arrangement of the rollers in the V-shaped roller unit 211 are not invariable, and can be adjusted according to the specific use environment while satisfying a condition that the front wheels of the electric vehicle can move in the Y-axis direction and are fixed in the X-axis direction. Referring to Fig. 3, the rear-wheel roller group 22 comprises a plurality of I-shaped roller units 221 arranged in the X-axis direction, which are arranged side by side in the Y-axis direction, and rear wheels supported on the I-shaped roller units 221 can move in the Y-axis direction. Preferably, the I-shaped roller unit 221 may be a second roller 2211 arranged horizontally. Of course, it is conceivable to those skilled in the art that the I-shaped roller unit 221 may also be configured as several rollers horizontally connected in series, etc.

With further reference to Fig. 1 in conjunction with Figs. 2 and 3, the second positioning portion 3 comprises two front-wheel centring mechanisms 31 (i.e., first centring mechanisms) and two rear-wheel centring mechanisms 32 (i.e., second centring mechanisms). The two front-wheel centring mechanisms 31 and the two rear-wheel centring mechanisms 32 can respectively move and position the front and rear wheels of the electric vehicle in the Y-axis direction. In conjunction with Figs. 2 and 3, preferably, the two front-wheel centring mechanisms 31 are symmetrically arranged about a symmetry axis of the battery swap platform 1 (as shown by the dot-and-dash line in Fig. 1). Each front-wheel centring mechanism 31 comprises a power transmission portion provided in the middle of a battery swap bottom plate in the Y-axis direction, and a pull plate 34 extending from the power transmission portion towards one side. The power transmission portion is integrally embedded into the battery swap platform 1, and part of the pull plate 34 protrudes from the battery swap platform 1. The rear-wheel centring mechanism 32 can move in synchronization with the front-wheel centring mechanism 31. Preferably, the rear-wheel centring mechanisms 32 may adopt the same structure and arrangement as the front-wheel centring mechanisms 31, that is, the two rear-wheel centring mechanisms 32 are also symmetrically arranged, and each rear-wheel centring mechanism comprises a power transmission portion and a pull rod extending towards one side. The power transmission portions output power to the pull plates 34, and the pull plates 34 can pull the front/rear wheels from the outside to the inside of the front/rear wheels of the electric vehicle, to respectively position the front/rear wheels of the electric vehicle in the second direction, so as to position the electric vehicle in the second direction. It is conceivable to those skilled in the art that the rear-wheel centring mechanisms 32 may also take other forms, as long as the form enables the rear wheels of the electric vehicle to move in a transverse direction and finally to be fixed in the transverse direction.

It should be noted that, in order to clearly describe the arrangement positions, a top layer of the battery swap platform 1 is omitted here. In fact, the battery swap platform 1 is divided into at least a top layer and a bottom layer. The top layer can form a plane supporting the advancement of the electric vehicle together with the front-wheel roller group 21 and the rear-wheel roller group 22.

As shown in the orientations of Figs. 2 and 3, specifically, the power transmission portion comprises a drive motor 331, and a lead screw 332 and nut 333 unit. The drive motor 331 is preferably a servo motor, which is connected to a lead screw 332 of the lead screw 332 and nut 333 unit. The pull plate 34 is connected to a nut 333 of the lead screw 332 and nut 333 unit. In addition, the front-/rear-wheel centring mechanism 32 further comprises a guide rail 334 arranged in the Y-axis direction and a slider 335 matching the guide rail 334. The slider 335 is connected to the nut 333 for moving the pull plate 34 in the arrangement direction of the guide rail 334. In conjunction with Fig. 2, in a possible embodiment, the servo motor is connected to the lead screw 332 via a coupling, and the lead screw 332 passes below the front-wheel roller group 21. A mounting frame 35 is provided between the pull plate 34 and the nut 333, and the pull plate 34 is connected to the nut 333 via the mounting frame 35. Parallel guide rails 334 and sliders 335 matching therewith are provided on two sides of a part of the lead screw 332 away from the motor. The middle of each of the sliders 335 is fixedly connected to the nut 333, and two ends of the slider 335 are slidably connected to the parallel guide rail 334, restricting the movement of the pull plate 34 along the direction of the parallel guide rail 334, which movement enables the pull plate 34 to pass right through the middle of the front-wheel roller group 21. In conjunction with Fig. 3, in another possible embodiment, the servo motor is connected to the lead screw 332 via a coupling, and the lead screw 332 passes below one side of the rear-wheel roller group 22. Parallel guide rails 334 and sliders 335 matching therewith are provided on two sides of a part of the lead screw 332 away from the motor. The middle of each of the sliders 335 is fixedly connected to the nut 333, and two ends of the slider 335 are slidably connected to the parallel guide rail 334. A mounting frame 35 is provided between the pull plate 34 and the sliders 335, and the pull plate 34 is fixedly connected to the sliders 335 via the mounting frame 35. The pull plate 34 moves along the direction of the parallel guide rail 334 under the restriction of the sliders 335, and this movement enables the pull plate 34 to pass right above the rear-wheel roller group 22.

It can be seen from the above description that through the provision of the two front-wheel centring mechanisms 31 and the two rear-wheel centring mechanisms 32, the invention can achieve the positioning by pulling the wheels from the outside to the inside of the wheels. The advantages of this positioning method are that on the one hand, unilateral differential adjustment of the movement of the electric vehicle can be achieved, for example the positioning accuracy of the electric vehicle and the battery swap robot is increased by means of unilateral fine-adjustment, thereby ensuring the success rate and accuracy of battery swapping. On the other hand, the configuration in which each front-/rear-wheel centring mechanism 32 is equipped with a power transmission portion also greatly reduces the load of the servo motor, thereby preventing the occurrence of overload of the servo motor. In addition, the use of the arrangement in which the power transmission portions are provided in the middle of the battery swap platform 1, the pull plates 34 are provided on two sides, and the power transmission portions are embedded into the battery swap platform 1 also effectively reduces the footprint of the front-/rear-wheel centring mechanisms 32 on the battery swap platform 1, and reduces the difficulty in parking.

It can be understood that although the above preferred arrangement of the front-wheel centring mechanisms 31 and the rear-wheel centring mechanisms 32 is that they are embedded into the battery swap platform 1 in a symmetrical manner, this arrangement is only used to illustrate the principles of the invention and not intended to limit the scope of protection of the invention. Those skilled in the art can adjust this arrangement without departing from the principles of the invention, so as to adapt same to more specific application scenarios. As an example, it is also possible to change the two servo motors from being placed along the Y axis into being placed side by side along the X axis, and each servo motor is connected to the lead screw 332 via a pair of bevel gears. Alternatively, the two servo motors are placed one behind the other along the symmetry axis in Fig. 1, and the positions of the lead screws 332 and the pull plates 34 are correspondingly adjusted, such that the two pull plates 34 can still be arranged symmetrically. As another example, it is also possible to use pneumatic cylinders or electric cylinders to replace the servo motors to complete the output of driving forces, and to arrange the front-wheel centring mechanisms 31 and/or the rear-wheel centring mechanisms 32 on the top layer or any other position of the battery swap platform 1, as long as the condition that the wheels are pulled from the outside to the inside of the wheels can be satisfied.

In conjunction with Fig. 1, in a possible embodiment, the positioning process of the vehicle positioning device for a battery charging and swapping station of the invention may be as follows.

The electric vehicle is driven to the battery swap platform 1, powered off and shifted into neutral, the front wheels of the vehicle enter the V-shaped front-wheel roller group 21 and are fixed, in an embedded manner, in the front-wheel roller group 21 in the driving direction; and the rear wheels of the electric vehicle are supported on the I-shaped rear-wheel roller group 22, at which case the vehicle completes positioning in the X-axis direction. The two front-wheel centring mechanisms 31 and the two rear-wheel centring mechanisms 32 simultaneously move the pull plates 34 from the outside to the inside of the wheels. The pull plate 34 that first comes into contact with a wheel of the electric vehicle pulls the wheel to move transversely on the front-wheel roller group 21 and/or the rear-wheel roller group 22. When the four pull plates 34 are all in contact with the wheels, the electric vehicle completes the preliminary positioning in the Y-axis direction and is fixed by the pulling rods. The current positional deviation is obtained, and a single centring mechanism is used to fine-adjust the vehicle body. After the adjustment is completed, the positioning of the electric vehicle is completed, and the subsequent battery swapping operation can be performed.

Finally, it should be noted that although this embodiment is described by taking the first centring mechanisms as the front-wheel centring mechanisms 31 and the second centring mechanisms as the rear-wheel centring mechanisms 32, this is not intended to limit the scope of protection of the invention. Those skilled in the art can also adjust the above correspondence relationship without departing from the principles of the invention, so as to adapt to more specific application scenarios. For example, the first centring mechanisms are the rear-wheel centring mechanisms 32, and the second centring mechanisms are the front-wheel centring mechanisms 31. Similarly, the correspondence relationships of the first roller group and the second roller group with the front-wheel roller group 21 and the rear-wheel roller group 22 can also be interchanged.

Heretofore, the technical solutions of the invention have been described with reference to the preferred embodiments shown in the accompanying drawings; however, those skilled in the art can readily understand that the scope of protection of the invention is obviously not limited to these particular embodiments. Those skilled in the art may make changes or substitutions on the features of the figures and the description, provided that the technical solutions after these changes or substitutions fall into the scope of protection of the claims.

## Claims

1. A vehicle positioning device for a battery charging and swapping station, the vehicle positioning device comprising a first positioning portion (2) and a second positioning portion (3) which are provided at a battery swap platform (1), the first positioning portion (2) being used to position a vehicle in an X-axis direction, and the second positioning portion (3) being used to position the vehicle in a Y-axis direction perpendicular to the X-axis direction, the X-axis direction being the driving direction, wherein the first positioning portion (2) comprises two first roller groups (21) arranged side by side in the Y-axis direction that are able to position the front/rear wheels of the vehicle in the X-axis direction and allow the front/rear wheels to move in the Y-axis direction,
**characterized in that** the second positioning portion (3) comprises two first centring mechanisms (31) arranged side by side in the Y-axis direction, each of the first centring mechanisms (31) comprising a power transmission portion and a pull plate (34),
wherein the power transmission portion comprises a drive motor (331) and a lead screw and nut unit having a lead screw (332) and a nut (333), the lead screw (332) passing below the first roller group (21), the drive motor (331) being connected to the lead screw (332) on one side of the first roller group (21) that is adjacent to the other first roller group (21), and the pull plate (34) being connected to the nut (333) via a mounting frame (35) on the other side of the first roller group (21) that is opposite to the one side, so that the pull plates (34) are able to pull the front/rear wheels from the outside to the inside of the front/rear wheels of the vehicle under the drive of the power transmission portions, so as to move the front/rear wheels of the vehicle in the Y-axis direction.

2. The vehicle positioning device for a battery charging and swapping station according to claim 1, **characterized in that** each of the first centring mechanisms further comprises a guide rail (334) arranged in the Y-axis direction and a slider (335) matching the guide rail (334), wherein the slider (335) is connected to the nut (333) for moving the respective pull plate (34) in the Y-axis direction.

3. The vehicle positioning device for a battery charging and swapping station according to claim 1, **characterized in that** the two first centring mechanisms (31) are installed on the battery swap platform (1), and/or the two first centring mechanisms are symmetrically arranged.

4. The vehicle positioning device for a battery charging and swapping station according to any one of claims 1 to 3, **characterized in that** the second positioning portion further comprises two second centring mechanisms (32) arranged side by side in the Y-axis direction and configured to be able to correspondingly move and position rear/front wheels of the vehicle in the Y-axis direction.

5. The vehicle positioning device for a battery charging and swapping station according to claim 3, **characterized in that** the first positioning portion (2) further comprises two second roller groups (22) arranged side by side in the Y-axis direction and being able to correspondingly move the rear/front wheels of the vehicle in the Y-axis direction, and each of the second centring mechanisms (32) comprises the power transmission portion and the pull plate (34),
wherein the power transmission portion comprises a drive motor (331) and a lead screw and nut unit having a lead screw (332) and a nut (333), the lead screw (332) passing below the second roller group (22), the drive motor (331) being connected to the lead screw (332) on one side of the second roller group (22) that is adjacent to the other second roller group (22), and the pull plate (34) being connected to the nut (333) via a mounting frame (35) on the other side of the second roller group (22) that is opposite to the one side, so that the pull plates (34) are able to pull, under the drive of the power transmission portions, the rear wheels from the outside to the inside of the rear wheels of the vehicle, so as to position the rear wheels of the vehicle in the Y-axis direction.

6. The vehicle positioning device for a battery charging and swapping station according to claim 1, **characterized in that** each of the first roller groups (21) comprises a plurality of V-shaped roller units (211) arranged side by side in the Y-axis direction, and the front/rear wheels of the vehicle are able to be embedded into the V-shaped roller units (211).

7. The vehicle positioning device for a battery charging and swapping station according to claim 5, **characterized in that** the second roller group (22) comprises a plurality of I-shaped roller units (221) arranged in the X-axis direction, which are arranged side by side in the Y-axis direction, and the rear/front wheels are able to be supported on the I-shaped roller units (221).

## Patentansprüche

1. Fahrzeugpositionierungsvorrichtung für eine Batterielade- und -wechselstation, wobei die Fahrzeugpositionierungsvorrichtung einen ersten Positionierungsabschnitt (2) und einen zweiten Positionierungsabschnitt (3) aufweist, die an einer Batteriewechselplattform (1) vorgesehen sind, wobei der erste Positionierungsabschnitt (2) dazu verwendet wird, ein Fahrzeug in einer X-Achsenrichtung zu positionieren, und der zweite Positionierungsabschnitt (3) dazu verwendet wird, das Fahrzeug in einer Y-Achsenrichtung rechtwinklig zur X-Achsenrichtung zu positionieren, wobei die X-Achsenrichtung die Fahrtrichtung ist,
wobei der erste Positionierungsabschnitt (2) zwei erste Rollengruppen (21) aufweist, die in der Y-Achsenrichtung nebeneinander angeordnet und in der Lage sind, die Vorder-/Hinterräder des Fahrzeugs in der X-Achsenrichtung zu positionieren und eine Bewegung der Vorder-/Hinterräder in der Y-Achsenrichtung zu ermöglichen,
**dadurch gekennzeichnet, dass** der zweite Positionierungsabschnitt (3) zwei erste Zentriermechanismen (31) aufweist, die in der Y-Achsenrichtung nebeneinander angeordnet sind, wobei jeder der ersten Zentriermechanismen (31) einen Kraftübertragungsabschnitt und eine Zugplatte (34) aufweist,
wobei der Kraftübertragungsabschnitt einen Antriebsmotor (331) und eine Gewindespindel- und Muttereinheit mit einer Gewindespindel (332) und einer Mutter (333) aufweist, die Gewindespindel (332) unterhalb der ersten Rollengruppe (21) verläuft, der Antriebsmotor (331) auf der einen Seite der ersten Rollengruppe (21), die der anderen ersten Rollengruppe (21) benachbart ist, mit der Gewindespindel (332) verbunden ist und die Zugplatte (34) über einen Montagerahmen (35) auf der anderen Seite der ersten Rollengruppe (21), die der einen Seite gegenüberliegt, mit der Mutter (333) verbunden ist, sodass die Zugplatten (34) in der Lage sind, unter dem Antrieb der Kraftübertragungsabschnitte die Vorder-/Hinterräder von der Außenseite zur Innenseite der Vorder-/Hinterräder des Fahrzeugs zu ziehen, um die Vorder-/Hinterräder des Fahrzeugs in der Y-Achsenrichtung zu bewegen.

2. Fahrzeugpositionierungsvorrichtung für eine Batterielade- und -wechselstation nach Anspruch 1, **dadurch gekennzeichnet, dass** jeder der ersten Zentriermechanismen ferner eine in der Y-Achsenrichtung angeordnete Führungsschiene (334) und einen zur Führungsschiene (334) passenden Schieber (335) aufweist, wobei der Schieber (335) mit der Mutter (333) zum Bewegen der jeweiligen Zugplatte (34) in der Y-Achsenrichtung verbunden ist.

3. Fahrzeugpositionierungsvorrichtung für eine Batterielade- und -wechselstation nach Anspruch 1, **dadurch gekennzeichnet, dass** die zwei ersten Zentriermechanismen (31) auf der Batteriewechselplattform (1) installiert sind und/oder die zwei ersten Zentriermechanismen symmetrisch angeordnet sind.

4. Fahrzeugpositionierungsvorrichtung für eine Batterielade- und -wechselstation nach einem der Ansprüche 1 bis 3, **dadurch gekennzeichnet, dass** der zweite Positionierungsabschnitt ferner zwei zweite Zentriermechanismen (32) aufweist, die in der Y-Achsenrichtung nebeneinander angeordnet und so konfiguriert sind, dass sie in der Lage sind, die Hinter-/Vorderräder des Fahrzeugs in der Y-Achsenrichtung entsprechend zu bewegen und zu positionieren.

5. Fahrzeugpositionierungsvorrichtung für eine Batterielade- und -wechselstation nach Anspruch 3, **dadurch gekennzeichnet, dass** der erste Positionierungsabschnitt (2) ferner zwei zweite Rollengruppen (22) aufweist, die in der Y-Achsenrichtung nebeneinander angeordnet und in der Lage sind, die Hinter-/Vorderräder des Fahrzeugs in der Y-Achsenrichtung entsprechend zu bewegen, und jeder der zweiten Zentriermechanismen (32) den Kraftübertragungsabschnitt und die Zugplatte (34) aufweist,
wobei der Kraftübertragungsabschnitt einen Antriebsmotor (331) und eine Gewindespindel- und Muttereinheit mit einer Gewindespindel (332) und einer Mutter (333) aufweist, die Gewindespindel (332) unterhalb der zweiten Rollengruppe (22) verläuft, der Antriebsmotor (331) auf der einen Seite der zweiten Rollengruppe (22), die der anderen zweiten Rollengruppe (22) benachbart ist, mit der Gewindespindel (332) verbunden ist und die Zugplatte (34) über einen Montagerahmen (35) auf der anderen Seite der zweiten Rollengruppe (22), die der einen Seite gegenüberliegt, mit der Mutter (333) verbunden ist, sodass die Zugplatten (34) in der Lage sind, unter dem Antrieb der Kraftübertragungsabschnitte die Hinterräder von der Außenseite zur Innenseite der Hinterräder des Fahrzeugs zu ziehen, um die Hinterräder des Fahrzeugs in der Y-Achsenrichtung zu positionieren.

6. Fahrzeugpositionierungsvorrichtung für eine Batterielade- und Wechselstation nach Anspruch 1, **dadurch gekennzeichnet, dass** jede der ersten Rollengruppen (21) eine Vielzahl von in der Y-Achsenrichtung nebeneinander angeordneten V-förmigen Rolleneinheiten (211) aufweist und die Vorder-/Hinterräder des Fahrzeugs in die V-förmigen Rolleneinheiten (211) einbettbar sind.

7. Fahrzeugpositionierungsvorrichtung für eine Batterielade- und Wechselstation nach Anspruch 5, **dadurch gekennzeichnet, dass** die zweite Rollengruppe (22) eine Vielzahl von in der X-Achsenrichtung angeordneten I-förmigen Rolleneinheiten (221) aufweist, die in der Y-Achsenrichtung nebeneinander angeordnet sind, und die Hinter-/Vorderräder auf den I-förmigen Rolleneinheiten (221) abstützbar sind.

## Revendications

1. Dispositif de positionnement de véhicule pour station de charge et d'échange de batterie, le dispositif de positionnement de véhicule comprenant une première partie de positionnement (2) et une seconde partie de positionnement (3) qui sont prévues sur une plate-forme d'échange de batterie (1), la première partie de positionnement (2) étant utilisée pour positionner un véhicule dans une direction d'axe X, et la seconde partie de positionnement (3) étant utilisée pour positionner le véhicule dans une direction d'axe Y perpendiculaire à la direction d'axe X, la direction d'axe X étant la direction de conduite,
dans lequel la première partie de positionnement (2) comprend deux groupes de rouleaux (21) agencés côte à côte dans la direction d'axe Y qui sont capables de positionner les roues avant/arrière du véhicule dans la direction d'axe X et permettent aux roues avant/arrière de se déplacer dans la direction d'axe Y,
**caractérisé en ce que** la seconde partie de positionnement (3) comprend deux premiers mécanismes de centrage (31) agencés côte à côte dans la direction d'axe Y, chacun des premiers mécanismes de centrage (31) comprenant une partie de transmission de puissance et une plaque de tirage (34),
dans lequel la partie de transmission de puissance comprend un moteur d'entraînement (331) et une unité vis mère et écrou ayant une vis mère (332) et un écrou (333), la vis mère (332) passant en dessous du premier groupe de rouleaux (21), le moteur d'entraînement (331) étant raccordé à la vis mère (332) sur un côté du premier groupe de rouleaux (21) qui est adjacent à l'autre premier groupe de rouleaux (21), et la plaque de tirage (34) étant raccordée à l'écrou (333) par l'intermédiaire d'un bâti de montage (35) sur l'autre côté du premier groupe de rouleaux (21) qui est opposé à l'un côté, de telle sorte que les plaques de tractions (34) sont capables de tirer les roues avant/arrière, de l'extérieur à l'intérieur des roues avant/arrière du véhicule, sous l'entraînement de la partie de transmission de puissances, afin de déplacer les roues avant/arrière du véhicule dans la direction d'axe Y.

2. Dispositif de positionnement de véhicule pour station de charge et d'échange de batterie selon la revendication 1, **caractérisé en ce que** chacun des premiers mécanismes de centrage comprend en outre un rail de guidage (334) agencé dans la direction d'axe Y et un coulisseau (335) assorti au rail de guidage (334), dans lequel le coulisseau (335) est raccordé à l'écrou (333) pour déplacer la plaque de tirage respective (34) dans la direction d'axe Y.

3. Dispositif de positionnement de véhicule pour station de charge et d'échange de batterie selon la revendication 1, **caractérisé en ce que** les deux premiers mécanismes de centrage (31) sont installés sur la plate-forme d'échange de batterie (1), et/ou les deux premiers mécanismes de centrage sont symétriquement agencés.

4. Dispositif de positionnement de véhicule pour station de charge et d'échange de batterie selon l'une quelconque des revendications 1 à 3, **caractérisé en ce que** la seconde partie de positionnement comprend en outre deux seconds mécanismes de centrage (32) agencés côte à côte dans la direction d'axe Y et configurés pour être capables de déplacer et de positionner, de façon correspondante, des roues arrière/avant du véhicule dans la direction d'axe Y.

5. Dispositif de positionnement de véhicule pour station de charge et d'échange de batterie selon la revendication 3, **caractérisé en ce que** la première partie de positionnement (2) comprend en outre deux seconds groupes de rouleaux (22) agencés côte à côte dans la direction d'axe Y et capables de déplacer, de façon correspondante, les roues arrière/avant du véhicule dans la direction d'axe Y, et chacun des seconds mécanismes de centrage (32) comprend la partie de transmission de puissance et la plaque de tirage (34),
dans lequel la partie de transmission de puissance comprend un moteur d'entraînement (331) et une unité vis mère et écrou ayant une vis mère (332) et un écrou (333), la vis mère (332) passant en dessous du second groupe de rouleaux (22), le moteur d'entraînement (331) étant raccordé à la vis mère (332) sur un côté du second groupe de rouleaux (22) qui est adjacent à l'autre second groupe de rouleaux (22), et la plaque de tirage (34) étant raccordée à l'écrou (333) par l'intermédiaire d'un bâti de montage (35) sur l'autre côté du second groupe de rouleaux (22) qui est opposé à l'un côté, de telle sorte que les plaques de tractions (34) sont capables de tirer, sous l'entraînement de la partie de transmission de puissances, les roues arrière, de l'extérieur à l'intérieur des roues arrière du véhicule, afin de positionner les roues arrière du véhicule dans la direction d'axe Y.

6. Dispositif de positionnement de véhicule pour station de charge et d'échange de batterie selon la revendication 1, **caractérisé en ce que** chacun des premiers groupes de rouleaux (21) comprend une pluralité d'unités rouleaux en forme de V (211) agencées côte à côte dans la direction d'axe Y, et les roues avant/arrière du véhicule sont capables d'être enchâssées dans les unités rouleaux en forme de V (211).

7. Dispositif de positionnement de véhicule pour station de charge et d'échange de batterie selon la revendication 5, **caractérisé en ce que** le second groupe de rouleaux (22) comprend une pluralité d'unités rouleaux en forme de I (221) agencées dans la direction d'axe X, qui sont agencées côte à côte dans la direction d'axe Y, et les roues arrière/avant sont capables d'être supportées sur les unités rouleaux en forme de I (221).
